# EUROPEAN PATENT APPLICATION

(11) **EP 4 571 547 A1**
(43) Date of publication of application: **18.06.2025**
(21) Application number: 23020553.6
(22) Date of filing: 15.12.2023
(51) Int. Cl.: G06F 21/55, H04L 9/40, H04W 12/12

(54) **A PROTECTION SYSTEM FOR A NON-VOLATILE MEMORY (NVM) AND A METHOD THEREOF**

(71) Applicant: Giesecke+Devrient Mobile Security Germany GmbH, 81677 München (DE)
(72) Inventor: Sidharth, Joshi, 411 004 Pune (IN)
(74) Representative: Giesecke+Devrient IP

(57) **Abstract**

The present disclosure relates to a protection system (106) for a non-volatile memory (NVM). The system (106) monitors one or more applets (110) at run time associated with an NVM read/write operation. The system (106) establishes a predefined policy associated with an NVM usage for said at least one applet among the one or more applets (110) for performing the read/write operation. The system (106) compares the NVM usage by said at least one applet among the one or more applets (110) with the predefined policy. The system (106) determines if said at least one applet among the one or more applets (110) is violating the predefined policy. The system (106), in response to a positive determination, provides a virtual environment at run time to prevent said at least one applet among the one or more applets (110) from an uncontrolled read/write access and provides the protection for the NVM.

## Description

### TECHNICAL FIELD

The present disclosure relates generally to the field of computer technology and protection against malicious applets. In particular, the present disclosure relates to a protection system for a non-volatile memory (NVM) and a method thereof.

### BACKGROUND

Background description includes information that may be useful in understanding the present invention. It is not an admission that any of the information provided herein is prior art or relevant to the presently claimed invention, or that any publication specifically or implicitly referenced is prior art.

Mobile devices are currently used for secure transactions such as mobile banking, mobile credit cards, and online banking etc. Flash memory/non-volatile memory (NVM) on these mobile devices may be vulnerable to attacks by unauthorized individuals and sensitive data may be compromised. To provide a secure environment for storing data, smart cards are embedded in the mobile device. However, the data transfer between applications on the mobile device and so-called applets/off-card applications may require access to the flash memory, leading to data security issues.

Patent document US2009122949A1 discloses a method for providing wear leveling in an NVM system. A method for providing wear leveling in an NVM system is disclosed. The non-volatile memory system includes memory blocks and relative wear counters associated with the memory blocks. Whenever a memory block is erased, the associated relative wear counter is incremented. Further, when any relative wear counter reaches a predetermined limit, the value of the lowest relative wear counter is subtracted from each relative wear counter. Therefore, the relative wear levels are maintained while reducing the amount of memory needed for each relative wear counter.

Patent document US2007294490A1 discloses a system and method for updating a count associated with a non-volatile memory/physical memory block. When the update count reaches a predetermined wear level threshold, the system increments a wear level for the non-volatile memory. Further, the system compares the current wear level of the non-volatile memory block to wear levels of other physical memory blocks to determine whether to update the physical memory block in place or move data on the physical memory block to a less-worn physical memory block.

Patent document US2009122949A1 discloses a method for providing wear leveling in a non-volatile memory system. The non-volatile memory system includes memory blocks and relative wear counters associated with the memory blocks. Whenever a memory block is erased, the associated relative wear counter is incremented. Further, when any relative wear counter reaches a predetermined limit, the value of the lowest relative wear counter is subtracted from each relative wear counter. Therefore, the relative wear levels are maintained while reducing the amount of memory needed for each relative wear counter.

Further, applets developed maliciously may be installed successfully and legitimate applets may be further attacked compromising the flash memory.

Although the above-mentioned prior arts disclose mechanisms for wear leveling the non-volatile memory, there is a requirement in the art for a means to overcome the above drawbacks, shortcomings, and limitations associated with existing protective mechanisms, and provide an improved system for detecting malicious applets and providing a protective action against malicious applets.

### OBJECTS OF THE PRESENT DISCLOSURE

Some of the objects of the present disclosure, which at least one embodiment herein satisfy are as listed hereinbelow.

It is an object of the present disclosure to overcome the above drawbacks, shortcomings, and limitations associated with existing mechanisms for protection against malicious applets.

It is an object of the present disclosure to provide a protection system for a non-volatile memory (NVM) that provides protection against malicious applets.

It is an object of the present disclosure to provide a protection system for the NVM that establishes predefined policies for specific applets associated with the NVM read/write.

It is an object of the present disclosure to provide a protection system for the NVM that monitors the NVM read/write operation by specific applets by comparing the NVM read/write operation of the specific applet against the predefined policy.

It is an object of the present disclosure to provide a protection system for the NVM that provides countermeasures to prevent an uncontrolled NVM read/write from malicious applets.

### SUMMARY

The present disclosure relates to an improved system for implementing enhanced security to smartcards.

An aspect of the present disclosure pertains to a protection system for a non-volatile memory (NVM) associated with an integrated circuit car (ICC). The system comprises a processing unit in communication with the ICC. The processing unit monitors one or more applets at run time. At least one applet associated with the one or more applets accesses the NVM of the ICC for performing a read/write operation. The processing unit establishes a predefined policy associated with an NVM usage for said at least one applet among the one or more applets for performing the read/write operation. The processing unit compares the NVM usage by said at least one applet among the one or more applets with the predefined policy established for said at least one applet. The processing unit determines if said at least one applet among the one or more applets is violating the predefined policy. The processing unit, in response to a positive determination, provides a virtual environment at run time to prevent said at least one applet among the one or more applets from an uncontrolled read/write access to the NVM and provides the protection for the NVM.

In an embodiment, in response to a negative determination, the processing unit may allow the read/write operation performed by said at least one applet among the one or more applets into the NVM.

In an embodiment, the processing unit via the virtual environment may be configured to enable a sandbox memory associated with said at least one applet among the one or more applets. The sandbox memory may prevent said at least one applet among the one or more applets from writing into the NVM. The processing unit via the virtual environment may be configured to facilitate writing by said at least one applet among the one or more applets into a random access memory (RAM). The processing unit via the virtual environment may be configured to remove said at least one applet among the one or more applets. The said at least one applet among the one or more applets may be deleted or uninstalled. The processing unit via the virtual environment may be configured to disable said at least one applet among the one or more applets from the uncontrolled read/write access to the NVM.

In an embodiment, the processing unit may be configured to execute/simulate the one or more applets in the sandbox memory for recording the NVM usage associated with said at least one applet among the one or more applets.

In an embodiment, the integrated circuit card may be a smart subscriber identity module (SIM) next generation card.

In an embodiment, the processing unit may be configured to generate an alarm upon the positive determination and prevent damage of the NVM.

An aspect of the present disclosure pertains to a method for protecting an NVM associated with an ICC. The method includes monitoring, by a processing unit in communication with the ICC, one or more applets at run time. At least one applet associated with the one or more applets accesses the NVM of the ICC for performing a read/write operation. The method includes establishing, by the processing unit, a predefined policy associated with an NVM usage for said at least one applet among the one or more applets for performing the read/write operation. The method includes comparing, by the processing unit, the NVM usage by said at least one applet among the one or more applets with the predefined policy established for said at least one applet. The method includes determining, by the processing unit, if said at least one applet among the one or more applets is violating the predefined policy. The method includes, in response to a positive determination, providing, by the processing unit, a virtual environment at run time to prevent said at least one applet among the one or more applets from an uncontrolled read/write access to the NVM and provide the protection for the NVM.

In an embodiment, the method may comprise allowing, by the processing unit, in response to a negative determination, the read/write operation performed by said at least one applet among the one or more applets into the NVM.

In an embodiment, the processing unit via the virtual environment may be configured to enable a sandbox memory associated with said at least one applet among the one or more applets. The sandbox memory may prevent said at least one applet among the one or more applets from writing into the NVM. The processing unit via the virtual environment may be configured to facilitate writing by said at least one applet among the one or more applets into a RAM. The processing unit via the virtual environment may be configured to remove said at least one applet among the one or more applets. The said at least one applet among the one or more applets may be deleted or uninstalled. The processing unit via the virtual environment may be configured to disable said at least one applet among the one or more applets from the uncontrolled read/write access to the NVM.

In an embodiment, , the method may comprise executing, by the processing unit, the one or more applets in the sandbox memory for recording the NVM usage associated with said at least one applet among the one or more applets.

Thus, the present disclosure provides an improved system for detecting malicious applets and providing protective action against malicious applets.

Various objects, features, aspects, and advantages of the present disclosure will become more apparent from the following detailed description of preferred embodiments, along with the accompanying drawing figures in which like numerals represent like features.

Within the scope of this application, it is expressly envisaged that the various aspects, embodiments, examples and alternatives set out in the preceding paragraphs, in the claims and/or in the following description and drawings, and in particular the individual features thereof, may be taken independently or in any combination. Features described in connection with one embodiment are applicable to all embodiments, unless such features are incompatible

### BRIEF DESCRIPTION OF DRAWINGS

The accompanying drawings are included to provide a further understanding of the present invention and are incorporated in and constitute a part of this specification. The drawings illustrate exemplary embodiments of the present invention and, together with the description,
FIG. 1 illustrates an exemplary network architecture 100 of a protection system for a non-volatile memory (NVM), in accordance with an embodiment of the present disclosure.
FIG. 2 illustrates an exemplary block diagram 200 of the protection system for the NVM of FIG. 1, in accordance with an embodiment of the present disclosure.
FIG. 3 illustrates an exemplary diagram 300 of an applet requesting access from the protection system of FIG. 1, in accordance with an embodiment of the present disclosure.
FIG. 4 illustrates an exemplary flow diagram 400 of the protection system of FIG. 1, in accordance with an embodiment of the present disclosure.
FIG. 5 illustrates an exemplary method flow diagram 500 of the protection system of FIG. 1, in accordance with an embodiment of the present disclosure.

### DETAILED DESCRIPTION

The following is a detailed description of embodiments of the disclosure depicted in the accompanying drawings. The embodiments are in such detail as to clearly communicate the disclosure. However, the amount of detail offered is not intended to limit the anticipated variations of embodiments; on the contrary, the intention is to cover all modifications, equivalents, and alternatives falling within the spirit and scope of the present disclosure as defined by the appended claims.

In the following description, numerous specific details are set forth in order to provide a thorough understanding of embodiments of the present invention. It will be apparent to one skilled in the art that embodiments of the present invention may be practiced without some of these specific details.

Embodiments of the present invention include various steps, which will be described below. The steps may be performed by hardware components or may be embodied in machine-executable instructions, which may be used to cause a general-purpose or special-purpose processor programmed with the instructions to perform the steps. Alternatively, steps may be performed by a combination of hardware, software, and firmware and/or by human operators.

Subscriber identity module (SIM) applets are small programs that communicate with a universal integrated circuit (UICC) card associated with a subscriber identity module (SIM). Malicious applets may be installed on the UICC card and steal sensitive information from the UICC card. Further, the sensitive information may be sent to attackers, who may misuse the information obtained from the UICC card. Additionally, the applets may exploit precious resources of the card via an uncontrolled NVM read/write operation.

The present disclosure overcomes the above drawbacks, shortcomings, and limitations associated with existing protective mechanisms and provides an improved system for detecting malicious applets by providing protective action against malicious applets.

In an aspect, a protection system for a non-volatile memory (NVM) associated with integrated circuit card (ICC) can include a processing unit in communication with the ICC. The processing unit can monitor one or more applets at run time. At least one applet associated with the one or more applets can access the NVM of the ICC for performing a read/write operation. The processing unit can establish a predefined policy associated with an NVM usage for said at least one applet among the one or more applets for performing the read/write operation. The processing unit can compare the NVM usage by said at least one applet among the one or more applets with the predefined policy established for said at least one applet. The processing unit can determine if said at least one applet among the one or more applets is violating the predefined policy. The processing unit, in response to a positive determination, can provide a virtual environment at run time to prevent said at least one applet among the one or more applets from an uncontrolled read/write access to the NVM and provides the protection for the NVM.

In an embodiment, the method can include allowing, by the processing unit, in response to a negative determination, the read/write operation performed by said at least one applet among the one or more applets into the NVM.

In an embodiment, the processing unit via the virtual environment can be configured to enable a sandbox memory associated with said at least one applet among the one or more applets 110. The sandbox memory can prevent said at least one applet among the one or more applets 110 from writing into the NVM of the ICC. The processing unit via the virtual environment can be configured to facilitate writing by said at least one applet among the one or more applets 110 into a random access memory (RAM). The processing unit via the virtual environment can be configured to remove said at least one applet among the one or more applets 110, where the said at least one applet among the one or more applets 110 can be deleted or uninstalled. The processing unit via the virtual environment can be configured to disable said at least one applet among the one or more applets 110 from the uncontrolled read/write access to the NVM.

In an embodiment, the processing unit can be configured to execute/simulate the one or more applets in the sandbox memory for recording the NVM usage associated with said at least one applet among the one or more applets.

In an embodiment, the integrated circuit card can be a smart subscriber identity module (SIM) next generation card.

In an embodiment, the processing unit can be configured to generate an alarm upon the positive determination and prevent damage of the NVM.

An aspect of the present disclosure pertains to a method for a protecting for an NVM associated with an ICC. The method can include monitoring, by a processing unit, in communication with the ICC, one or more applets at run time. At least one applet associated with the one or more applets can access the NVM of the ICC for performing a read/write operation. The method can include establishing, by the processing unit, a predefined policy associated with an NVM usage for said at least one applet among the one or more applets for performing the read/write operation. The method can include comparing, by the processing unit, the NVM usage by said at least one applet among the one or more applets with the predefined policy established for said at least one applet. The method can include determining, by the processing unit, if said at least one applet among the one or more applets is violating the predefined policy. The method can include, in response to a positive determination, providing, by the processing unit, a virtual environment at run time to prevent said at least one applet among the one or more applets from an uncontrolled read/write access to the NVM and provide the protection for the NVM.

In an embodiment, the method can include allowing, by the processing unit, in response to a negative determination, the read/write operation performed by said at least one applet among the one or more applets into the NVM.

In an embodiment, the processing unit via the virtual environment can be configured to enable a sandbox memory associated with said at least one applet among the one or more applets. The sandbox memory can prevent said at least one applet among the one or more applets from writing into the NVM. The processing unit via the virtual environment can be configured to facilitate writing by said at least one applet among the one or more applets into a RAM. The processing unit via the virtual environment can be configured to remove said at least one applet among the one or more applets. The said at least one applet among the one or more applets can be deleted or uninstalled. The processing unit via the virtual environment can be configured to disable said at least one applet among the one or more applets from the uncontrolled read/write access to the NVM.

In an embodiment, , the method can include executing, by the processing unit, the one or more applets in the sandbox memory for recording the NVM usage associated with said at least one applet among the one or more applets.

Thus, the present disclosure provides an improved system for detecting malicious applets and providing protective action against malicious applets.

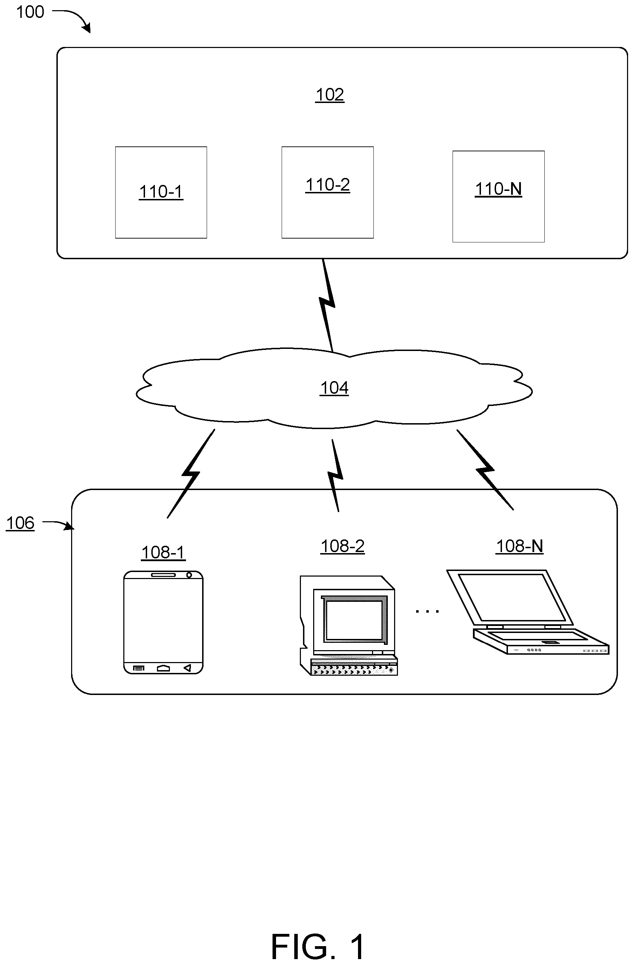

Referring to FIG. 1, the network architecture 100 may include a protection system 106 for an NVM associated with the ICC 108. Further, the protection system 106 may be interchangeably mentioned as a system 106 throughout the disclosure for the sake of brevity. The system 106 may be connected to a server 102 via a network 104. The system 106 may be incorporated with one or more integrated circuit cards (108-1, 108-2... 108-N). The one or more integrated circuit cards (108-1, 108-2... 108-N) may be collectively referred to as 108. One or more applets (110-1, 110-2... 110-N) may be downloaded from the server 102 on the one or more integrated circuit cards 108 for performing one or more functions. The one or more applets may be interchangeably mentioned as the one or more applets 110 for the sake of brevity.

In an embodiment, the network 104 may include, by way of example but not limitation, at least a portion of one or more networks having one or more nodes that transmit, receive, forward, generate, buffer, store, route, switch, process, or a combination thereof, etc. one or more messages, packets, signals, waves, voltage or current levels, some combination thereof, or so forth. The network 104 may also include, by way of example but not limitation, one or more of a wireless network, a wired network, an internet, an intranet, a public network, a private network, a packet-switched network, a circuit-switched network, an ad hoc network, an infrastructure network, a Public-Switched Telephone Network (PSTN), a cable network, a cellular network, a satellite network, a fiber optic network, or some combination thereof.

In an embodiment, an applet developer may implement one or more applets 110. The one or more applets may be run on a virtual environment/sandbox of the system 106. The sandbox may be specifically created to study the NVM read /write behaviour associated with the one or more applets 110. The system 106 may execute the one or more applets 110 in the sandbox by means of specific tests such that the NVM access behavior of the one or more applets 110 may be recorded. Output from the specific tests may include a predefined policy with certain parameters that describes a normal behavior of the one or more applets 110 during the NVM read/write operation. This predefined policy of NVM utilization may be part of an installation command or part of a cap file. If the applet developer skips the predefined policy or if the predefined policy is missing during the applet installation, the system 106 may use a default memory usage profile which may be already configured in the operating system (OS).

In an embodiment, the system 106 may provide run time monitoring associated with the one or more applets 110. The system 106 may record the NVM access behaviour/NVM usage associated with at least one applet among the one or more applets 110 at run time and compare the NVM usage by said at least one applet among the one or more applets 110 with the predefined policy established for said at least one applet. Further, the system 106 may determine if said at least one applet among the one or more applets 110 is violating the predefined policy. In response to a positive determination, the system 106 may provide a virtual environment at run time to prevent said at least one applet among the one or more applets 110 from an uncontrolled read/write access to the NVM. Further, if there is run time deviation against the predefined policy, the system may 106 may raise an alarm such that the malicious usage may be handled using countermeasures and damage to the NVM may be prevented.

In an embodiment, the system 106 may provide event handling via the virtual environment. The virtual environment may be a sandbox memory associated with said at least one applet among the one or more applets 110 that prevents said at least one applet among the one or more applets 110 from writing into the NVM. The system 106 may via the virtual environment facilitate writing by said at least one applet among the one or more applets 110 into the random access memory (RAM) during the run time deviation against the predefined policy. The system 106 may remove said at least one applet among the one or more applets 110, where the said at least one applet among the one or more applets 110 may be deleted or uninstalled. Further, the system 106 may disable said at least one applet among the one or more applets 110 from the uncontrolled read/write access to the NVM.

In an embodiment, the predefined policy may be defined for the one or more applets 110 specific to the NVM read/write by a policy checker module configured in the system 106. The applet developer may estimate the NVM read-write cycles required for the operations of the one or more applets 110. This may be in terms of upper bound and lower bound considered in a test plan of the one or more applets and the OS. Additionally, a specification and a constraint may be derived from the test plan in the form of a document or in the form of a static/dynamic code analysis tool, a test report, or a pre-compiled time configuration of a run time policy monitor.

Further, in an embodiment, an OS component may be the subscriber of the event generated by the policy checker module. In an event of an uncontrolled NVM access by the one or more applets 110, the policy checker module may generate the virtual environment/sandbox to prevent the NVM access by a malicious applet among the one or more applets 110. Sandboxing may be achieved by changing the memory type, from the NVM to a random access memory (RAM) or silently ignoring the NVM access from the malicious applet among the one or more applets 110. The system 106 may uninstall/delete the malicious applet, after receiving the event from the policy checker module. If deletion of the applet is not possible, then sandboxing may be enabled to prevent uncontrolled NVM access and damage to the NVM.

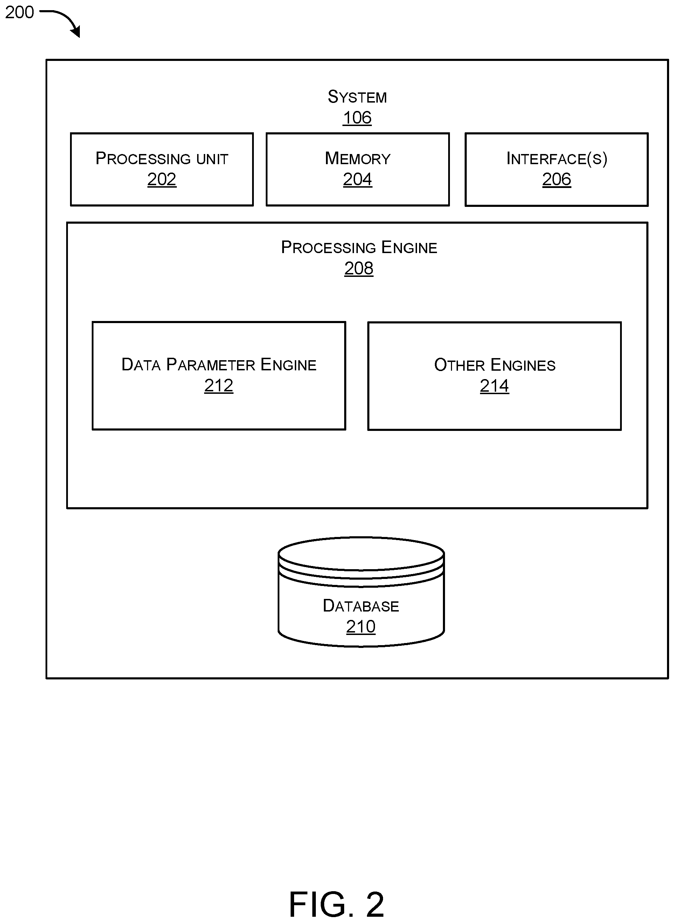

Referring to FIG. 2, in an embodiment, the system 106 may comprise a processing unit 202 comprising one or more first processor(s) that may be implemented as one or more microprocessors, microcomputers, microcontrollers, digital signal processors, central processing units, logic circuitries, and/or any devices that process data based on operational instructions. Among other capabilities, the processing unit 202 may be configured to fetch and execute computer-readable instructions stored in a memory 204 of the system 106. The memory 204 may be configured to store one or more computer-readable instructions or routines in a non-transitory computer-readable storage medium, which may be fetched and executed to create or share data packets over a network service. The memory 204 may comprise any non-transitory storage device including, for example, volatile memory such as random-access memory (RAM), or non-volatile memory such as erasable programmable read only memory (EPROM), flash memory, and the like.

In an embodiment, the system 106 may include an interface(s) 206. The interface(s) 206 may comprise a variety of interfaces, for example, interfaces for data input and output (I/O) devices, storage devices, and the like. The interface(s) 206 may also provide a communication pathway for one or more components of the system 106. Examples of such components include, but are not limited to, processing engine(s) 208 and a database 210, where the processing engine(s) 208 may include, but not be limited to, a data ingestion engine 212 and other engine(s) 214. In an embodiment, the other engine(s) 214 may include, but not limited to, a data management engine, an input/output engine, and a notification engine.

In an embodiment, the processing engine(s) 208 may be implemented as a combination of hardware and programming (for example, programmable instructions) to implement one or more functionalities of the processing engine(s) 208. In examples described herein, such combinations of hardware and programming may be implemented in several different ways. For example, the programming for the processing engine(s) 208 may be processor-executable instructions stored on a non-transitory machine-readable storage medium and the hardware for the processing engine(s) 208 may comprise a processing resource (for example, one or more processors), to execute such instructions. In the present examples, the machine-readable storage medium may store instructions that, when executed by the processing resource, implement the processing engine(s) 208. In such examples, the system 106 may comprise the machine-readable storage medium storing the instructions and the processing resource to execute the instructions, or the machine-readable storage medium may be separate but accessible to the system 106 and the processing resource. In other examples, the processing engine(s) 208 may be implemented by electronic circuitry.

In an embodiment, the ICC 108 can include one or more second processors coupled to the NVM that may store one or more instructions executable by the processors and cause the ICC to perform various operations as described herein. It should be obvious for a person skilled in the art that the second processors and NVM of the ICC 108 are different from the first processors and memory 204 of the processing unit 202. However, in some embodiments, the first processors and NVM of the ICC 108, and the second processors and memory 204 of the processing unit 202 can also be the same, wherein the ICC 108 can function as the processing unit 108 to perform various operations as described herein, and all such embodiments are well within the scope of this disclosure.

In an embodiment, the processing unit 202 may receive a request via the data ingestion engine 212. The request may be received from one or more applets 110. The processing unit 202 may store the request in the database 210. The request may be based on a read/write operation initiated by one or more applets 110. The one or more applets 110 may be configured to perform the read/write into a NVM of the processing unit 202.

In an embodiment, the processing unit 202 may monitor the one or more applets 110 at run time. At least one applet associated with the one or more applets 110 may access the NVM of the ICC 108 for performing a read/write operation. The processing unit 202 may establish a predefined policy associated with an NVM usage for said at least one applet among the one or more applets 110 for performing the read/write operation. The processing unit 202 may compare the NVM usage by said at least one applet among the one or more applets 110 with the predefined policy established for said at least one applet. The processing unit 202 may determine if said at least one applet among the one or more applets 110 is violating the predefined policy. The processing unit 202, in response to a positive determination, may provide a virtual environment at run time to prevent said at least one applet among the one or more applets 110 from an uncontrolled read/write access to the NVM and provides the protection for the NVM.

In an embodiment, the processing unit 202 may in response to a negative determination may be configured to allow the read/write operation performed by said at least one applet among the one or more applets 110 into the NVM.

In an embodiment, the processing unit 202 via the virtual environment may be configured to enable a sandbox memory associated with said at least one applet among the one or more applets 110. The sandbox memory may prevent said at least one applet among the one or more applets 110 from writing into the NVM. The processing unit 202 may facilitate writing by said at least one applet among the one or more applets 110 into a RAM. The processing unit 202 may remove said at least one applet among the one or more applets 110 were said at least one applet among the one or more applets 110 may be deleted or uninstalled. The processing unit 202 may disable said at least one applet among the one or more applets 110 from the uncontrolled read/write access to the NVM.

In an embodiment, the processor 202 may be configured to execute/simulate the one or more applets 110 in the sandbox memory for recording the NVM usage associated with said at least one applet among the one or more applets 110.

In an embodiment, the integrated circuit card may be a SIM next generation card.

In an embodiment, the processing unit 202 may be configured to generate an alarm upon the positive determination and prevent damage of the NVM.

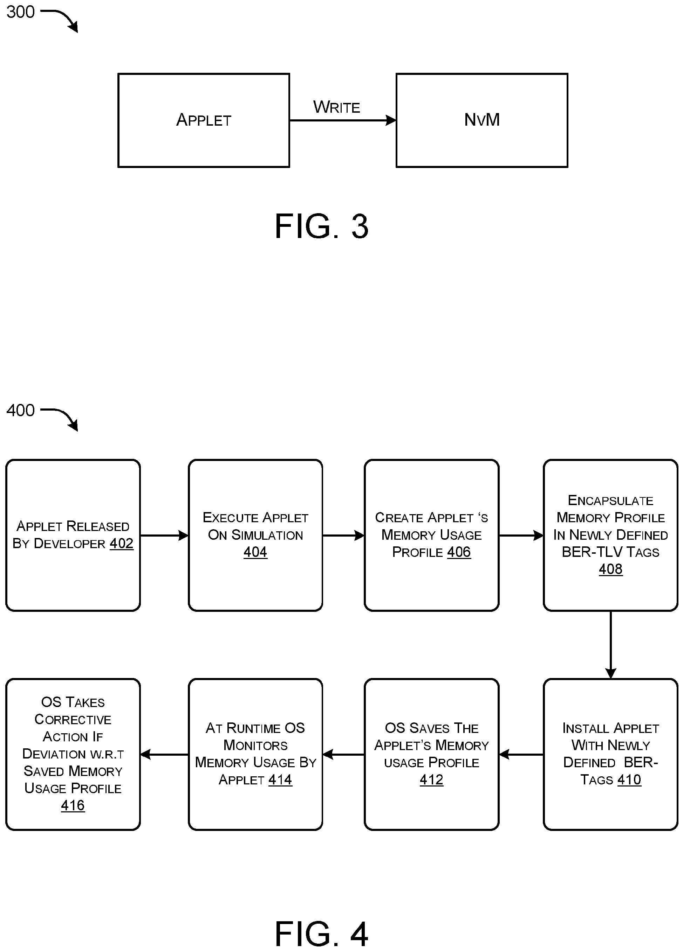

Referring to FIG. 3, in an embodiment, the system 106 may receive a request from the one or more applets 110 for performing a write operation into the NVM.

In an embodiment, the system 106 may monitor one or more applets 110 at run time. An applet associated with the one or more applets 110 may access the NVM of the ICC 108 for performing a read/write operation. The system 106 may establish a predefined policy associated with an NVM usage for said at least one applet among the one or more applets 110 for performing the read/write operation. The system 106 may compare the NVM usage by said at least one applet among the one or more applets 110 with the predefined policy established for said at least one applet. Further, the system 106 may determine if said at least one applet among the one or more applets 110 is violating the predefined policy. In response to a positive determination, the system 106 may provide a virtual environment at run time to prevent said at least one applet among the one or more applets 110 from an uncontrolled read/write access to the NVM and provide the protection system 106 for the NVM. Further, in response to a negative determination, the system 106 may to allow the read/write operation performed by said at least one applet among the one or more applets 110 into the NVM.

In an embodiment, the system 106 may execute/simulate the one or more applets in a sandbox memory for recording the NVM usage associated with said at least one applet among the one or more applets 110.

In an embodiment, the system 106 may via the virtual environment enable the sandbox memory associated with said at least one applet among the one or more applets 110. The sandbox memory may prevent said at least one applet among the one or more applets 110 from writing into the NVM. The system 106 may facilitate writing by said at least one applet among the one or more applets 110 into the RAM. The system 106 may remove said at least one applet among the one or more applets 110, where the said at least one applet among the one or more applets 110 may be deleted or uninstalled. The system 106 may disable said at least one applet among the one or more applets 110 from the uncontrolled read/write access to the NVM. Further, the system 106 may generate an alarm upon the positive determination and prevent damage of the NVM.

Referring to FIG. 4, in an embodiment, the flow diagram 400 of the NVM protection system may include the following steps.

At step 402: An applet among the one or more applets 110 may be released by a developer.

At step 404: The system 106 may execute the applet among the one or more applets 110.

At step 406: The system 106 may create the applet's NVM/memory usage profile.

At step 408: The system 106 may encapsulate the memory profile in a newly defined Basic Encoding Rule (BER) Tag-length-value (TLV) tags.

At step 410: The system 106 may install the applet with the newly defined BER TLV tags.

At step 412: The system/OS 106 may save the applet's NVM/memory usage profile.

At step 414: The system 106 may at run time may monitor the NVM usage of the applet among the one or more applets 110.

At step 416: The system 106 may take a corrective action based on a deviation by the applet among the one or more applets 110 with respect to the applet's NVM usage profile.

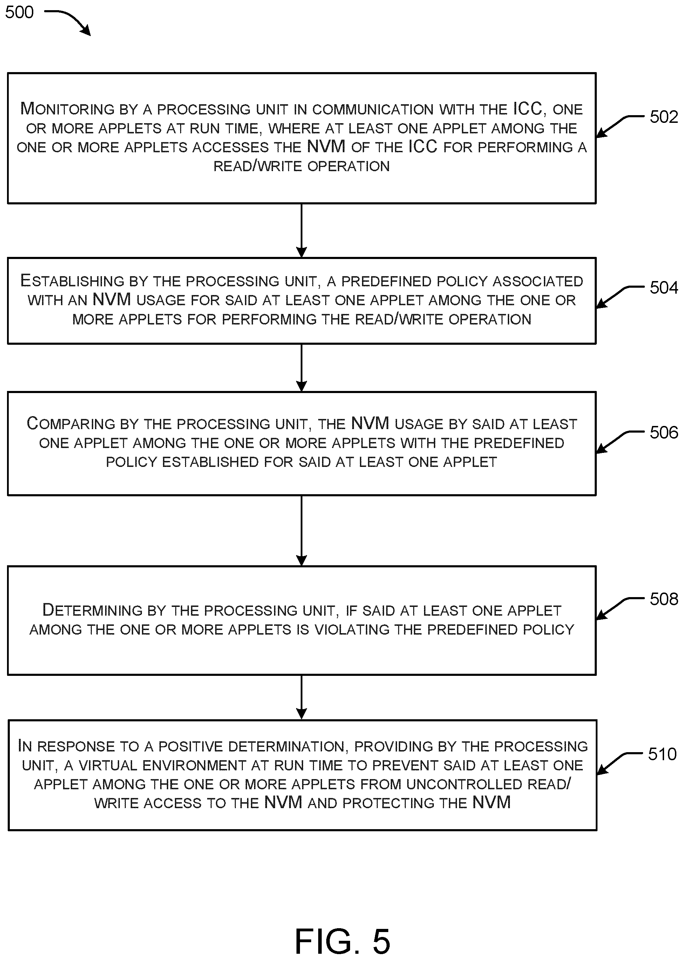

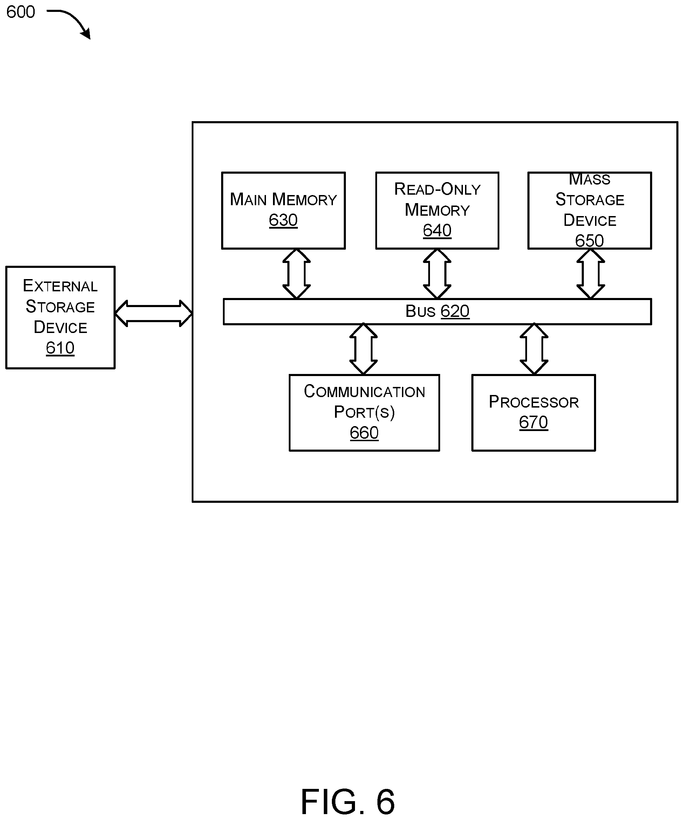

Referring to FIG. 5, in an embodiment, the method flow diagram 500 of the protection system may include the following steps.

In an embodiment, the method may include monitoring 502, by the system 106, in communication with an ICC, one or more applets 110 at run time where at least one applet associated with the one or more applets 110 may access the NVM of the ICC 108 for performing a read/write operation.

In an embodiment, the method may include establishing 504, by the system 106, a predefined policy associated with an NVM usage for said at least one applet among the one or more applets 110 for performing the read/write operation.

In an embodiment, the method may include comparing 506, by the system 106, the NVM usage by said at least one applet among the one or more applets 110 with the predefined policy established for said at least one applet.

In an embodiment, the method may include determining 508, by the system 106, if said at least one applet among the one or more applets 110 is violating the predefined policy.

In an embodiment, the method may include, in response to a positive determination, providing 510 by the system 106, a virtual environment at run time to prevent said at least one applet among the one or more applets 110 from an uncontrolled read/write access to the NVM and providing the NVM protection.

If the specification states a component or feature "may", "can", "could", or "might" be included or have a characteristic, that particular component or feature is not required to be included or have the characteristic.

As used in the description herein and throughout the claims that follow, the meaning of "a," "an," and "the" includes plural reference unless the context clearly dictates otherwise. Also, as used in the description herein, the meaning of "in" includes "in" and "on" unless the context clearly dictates otherwise.

Moreover, in interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced.

While the foregoing describes various embodiments of the invention, other and further embodiments of the invention may be devised without departing from the basic scope thereof. The scope of the invention is determined by the claims that follow. The invention is not limited to the described embodiments, versions or examples, which are comprised to enable a person having ordinary skill in the art to make and use the invention when combined with information and knowledge available to the person having ordinary skill in the art.

### ADVANTAGES OF THE INVENTION

The proposed invention overcomes the above drawbacks, shortcomings, and limitations associated with existing protective mechanisms, and provides an improved system for detecting malicious applets by providing a protective action against malicious applets.

The proposed invention provides a protection system for a non-volatile memory (NVM) that provides protection against malicious applets.

The proposed invention provides the protection system for the NVM that establishes predefined policies for specific applets associated with the NVM read/write.

The proposed invention provides the protection system for the NVM that monitors the NVM read/write operation by specific applets by comparing the NVM read/write operation of the specific applet against the predefined policy.

The proposed invention provides the protection system of the NVM that provides countermeasures to prevent an uncontrolled NVM read/write from malicious applets.

## Claims

1. A protection system (106) for a non-volatile memory, NVM, associated with an integrated circuit card, ICC, (108), the protection system (106) comprising:
a processing unit (202) in communication with the integrated circuit card, ICC (108), the processing unit configured to;
monitor one or more applets (110) at run time, wherein at least one applet among the one or more applets (110) accesses the NVM of the ICC (108) for performing a read/write operation;
establish a predefined policy associated with an NVM usage for said at least one applet among the one or more applets (110) for performing the read/write operation;
compare the NVM usage by said at least one applet among the one or more applets (110) with the predefined policy established for said at least one applet;
determine if said at least one applet among the one or more applets (110) is violating the predefined policy; and
in response to a positive determination, provide a virtual environment at run time to prevent said at least one applet among the one or more applets (110) from an uncontrolled read/write access to the NVM and provide the protection for the NVM.

2. The system (106) as claimed in claim 1, wherein in response to a negative determination, the processing unit (202) is configured to allow the read/write operation performed by said at least one applet among the one or more applets (110) into the NVM.

3. The system (106) as claimed in claim 1 or 2, wherein the processing unit (202) via the virtual environment is configured to:
enable a sandbox memory associated with said at least one applet among the one or more applets (110), wherein the sandbox memory prevents said at least one applet among the one or more applets (110) from writing into the NVM;
facilitate writing by said at least one applet among the one or more applets (110) into a random access memory (RAM) of the ICC (108);
remove said at least one applet among the one or more applets (110), wherein the said at least one applet among the one or more applets (110) are deleted or uninstalled; and
disable said at least one applet among the one or more applets (110) from the uncontrolled read/write access to the NVM.

4. The system (106) as claimed in claim 4, wherein the processing unit (202) is configured to execute/simulate the one or more applets (110) in the sandbox memory for recording the NVM usage associated with said at least one applet among the one or more applets (110).

5. The system (106) as claimed in any of claims 1 to 4, wherein the integrated circuit card (108) is a smart subscriber identity module (SIM) next generation card.

6. The system (106) as claimed in any of claims 1 to 5, wherein the processing unit (202) is configured to generate an alarm upon the positive determination and prevent damage to the NVM.

7. A method (500) for protecting a non-volatile memory, NVM, associated with an integrated circuit card, ICC (108), the method 500 comprising:
monitoring (502), by a processing unit (202) in communication with the ICC (108), one or more applets (110) at run time, wherein at least one applet among the one or more applets (110) accesses the NVM of the ICC (108) for performing a read/write operation;
establishing (504), by the processing unit (202), a predefined policy associated with an NVM usage for said at least one applet among the one or more applets (110) for performing the read/write operation;
comparing (506), by the processing unit (202), the NVM usage by said at least one applet among the one or more applets (110) with the predefined policy established for said at least one applet;
determining (508), by the processing unit (202), if said at least one applet among the one or more applets (110) is violating the predefined policy; and
in response to a positive determination, providing (510), by the processing unit (202), a virtual environment at run time to prevent said at least one applet among the one or more applets (110) from an uncontrolled read/write access to the NVM and protecting the NVM.

8. The method (500) as claimed in claim 7, comprising allowing, by the processing unit (202), in response to a negative determination, the read/write operation performed by said at least one applet among the one or more applets (110) into the NVM.

9. The method (500) as claimed in claim 7 or 8, wherein the processing unit (202) via the virtual environment is configured to:
enable a sandbox memory associated with said at least one applet among the one or more applets (110), wherein the sandbox memory prevents said at least one applet among the one or more applets (110) from writing into the NVM;
facilitate writing by said at least one applet among the one or more applets 110 into a random access memory (RAM) of the ICC 108;
remove said at least one applet among the one or more applets (110), wherein the said at least one applet among the one or more applets (110) are deleted or uninstalled; and
disable said at least one applet among the one or more applets (110) from the uncontrolled read/write access to the NVM.

10. The method (500) as claimed in any of claims 7 to 9, comprising executing, by the processing unit (202), the one or more applets (110) in the sandbox memory for recording the NVM usage associated with said at least one applet among the one or more applets (110).
